# EUROPÄISCHE PATENTANMELDUNG

(11) **EP 3 594 638 A1**
(43) Veröffentlichungstag der Anmeldung: **15.01.2020**
(21) Anmeldenummer: 18183381.5
(22) Anmeldetag: 13.07.2018
(51) Int. Cl.: G01F 23/26

(54) **VORRICHTUNGEN UND VERFAHREN ZUR KAPAZITIVEN SCHAUMDETEKTION IN FLÜSSIGKEITSBEHÄLTERN**

(71) Anmelder: TECAN TRADING AG, 8708 Männedorf (CH)
(72) Erfinder: OTT, Philipp, 8496 Steg (CH)
(74) Vertreter: OK pat AG

(57) **Zusammenfassung**

Die vorliegende Erfindung betrifft Vorrichtungen sowie entsprechende Verfahren zur kapazitiven Schaumdetektion in Flüssigkeitsbehältern. Eine erfindungsgemässe Vorrichtung umfasst ein Sensor (2) mit einer Messelektrode (3), eine Bodenplatte (4), welche als Gegenelektrode dient, zum Anordnen eines Flüssigkeitsbehälters (1), eine Sensorelektronikeinheit (7), welche mit der Messelektrode (3) und der Bodenplatte (4) verbunden ist und zum Bestimmen einer Impedanz, insbesondere einer Kapazität, zwischen der Messelektrode (3) und der Bodenplatte (4) ausgeführt ist, sowie eine Auswerteeinheit (A), wobei die Messelektrode (3) im Wesentlichen senkrecht zur Bodenplatte (4) angeordnet ist. Bei einer alternativen Variante der erfindungsgemässen Vorrichtung ist der Sensor mit der Messelektrode koplanar auf der Bodenplatte angeordnet, und der Flüssigkeitsbehälter wird in einer Trägereinheit, welche als Gegenelektrode dient, angeordnet, wobei die Sensorelektronikeinheit mit der Messelektrode und der Trägereinheit verbunden ist. Bei beiden Varianten umfasst die Sensorelektronikeinheit (7) ein Signalgenerator, mit welchem ein erstes Signal zum Anregen der Messelektrode (3) mit einer ersten Frequenz und ein zweites Signal zum Anregen der Messelektrode (3) mit einer zweiten Frequenz erzeugbar ist. Die Auswerteeinheit (A) ist dazu ausgeführt, basierend auf der Impedanz, insbesondere der Kapazität, ein Vorhandensein von Schaum (S) im Flüssigkeitsbehälter (1) zu detektieren, falls z.B. eine Differenz zwischen einem ersten Messsignal beim Anregen der Messelektrode (3) mit dem ersten Signal und einem zweiten Messsignal beim Anregen der Messelektrode (3) mit dem zweiten Signal einen vorgegebenen Schwellwert übersteigt.

## Beschreibung

### TECHNISCHES GEBIET DER ERFINDUNG

Die vorliegende Erfindung ist dem technischen Gebiet der automatisierten Laborsysteme bzw. -anlagen, wie beispielsweise medizinische, chemische, pharmazeutische oder forensische Analysegeräte, zugeordnet und betrifft spezifisch Flüssigkeitsbearbeitungssysteme, im Speziellen Vorrichtungen sowie entsprechende Verfahren zur kapazitiven Schaumdetektion in Flüssigkeitsbehältern.

### HINTERGRUND DER ERFINDUNG

Wenn in medizinischen, chemischen, analytischen, pharmazeutischen oder forensischen Labors grosse Mengen an Proben zu untersuchen sind, werden heute meist automatisierte Laborsysteme bzw. -anlagen eingesetzt, welche eine rasche und zuverlässige Verarbeitung jeder einzelnen Probe ermöglichen. Solche Laborsysteme sind oftmals als Flüssigkeitsbearbeitungssysteme auf die Handhabung von Flüssigkeitsvolumina ausgelegt. Dabei werden üblicherweise ein oder mehrere Roboter für den vollautomatischen Betrieb solcher Laborsysteme eingesetzt. Diese Roboter sind insbesondere auf den Umgang mit Flüssigkeitsbehältern spezialisiert und werden daher im Fachjargon als "Liquid Handling Roboter" bezeichnet. Die Proben werden meist in Probenbehältern, wie z.B. Probenröhrchen, von denen mehrere in einer Trägereinheit (im Fachjargon auch "Rack" genannt) angeordnet sind, angeliefert. Zudem werden oftmals Reagenzien, welche im Verlauf der Probenbearbeitung den Proben beigefügt werden, in Gefässen wie Fläschchen oder Trögen bereitgestellt.

Die Probenröhrchen und Reagenziengefässe weisen bei der Bereitstellung zur Verarbeitung durch das Flüssigkeitsbearbeitungssystem üblicherweise unterschiedlich Füllstände auf oder sind in manchen Fällen sogar leer. Zudem kann es vorkommen, dass sich beim Bereitstellen der Probenröhrchen und Reagenziengefässe Schaum auf der Oberfläche der Flüssigkeit bildet. Um eine rasche und effiziente Bearbeitung zu gewährleisten sollte der Füllstand der einzelnen Flüssigkeitsbehälter bekannt sein bevor der Roboter seine Arbeit aufnimmt. Insbesondere sollten leere Behälter identifiziert werden können, und das System sollte z.B. auch in der Lage sein zu erkennen, ob sich überhaupt ein Probenröhrchen in einer bestimmten Aufnahme der Trägereinheit befindet, was für ein Typ Probenröhrchen sich in einer bestimmten Aufnahme der Trägereinheit befindet, oder um was für eine Art Trägereinheit es sich handelt. Zudem kann es auch hilfreich sein, bestimmte Merkmale an einer Trägereinheit zu erkennen. Weiter ist es wichtig zu wissen, ob sich Schaum auf der Oberfläche der Flüssigkeit befindet.

Es besteht daher der Bedarf nach Mitteln, welche eine einfache (und folglich kostengünstige) sowie zuverlässige Bestimmung von Schaum in Flüssigkeitsbehältern in automatisierten Flüssigkeitsbearbeitungssystemen erlauben und damit eine effizientere Verarbeitung von grossen Mengen an Proben und Reagenzien ermöglichen.

### ZUSAMMENFASSUNG DER ERFINDUNG

Es ist eine Aufgabe der vorliegenden Erfindung Vorrichtungen zur Schaumdetektion in Flüssigkeitsbehältern bereitzustellen, mit deren Hilfe bereits bei der Bereitstellung eines Flüssigkeitsbehälters für die nachfolgende Verarbeitung durch den Liquid Handling Roboter schnell und zuverlässig erkannt werden kann, ob sich Schaum im Flüssigkeitsbehälter befindet. Diese Aufgabe wird erfindungsgemäss durch die Vorrichtung gemäss Anspruch 1 sowie die alternative Vorrichtung gemäss Anspruch 10 erfüllt.

Es ist zudem eine Aufgabe der vorliegenden Erfindung entsprechende Verfahren zur Schaumdetektion bereitzustellen, welche es erlauben, bereits bei der Bereitstellung eines Flüssigkeitsbehälters für die nachfolgende Verarbeitung durch den Liquid Handling Roboter schnell und zuverlässig zu erkennen, ob sich Schaum im Flüssigkeitsbehälter befindet. Diese Aufgabe wird erfindungsgemäss durch das in Anspruch 7 vorgeschlagene Verfahren sowie das in Anspruch 13 angegebene alternative Verfahren gelöst.

Spezifische erfindungsgemässe Ausführungsvarianten werden in den abhängigen Ansprüchen festgelegt.

Eine erfindungsgemässe Vorrichtung zur kapazitiven Schaumdetektion in Flüssigkeitsbehältern, insbesondere Behälter (wie Tröge oder Fläschchen) für Reagenzien oder Probenröhrchen, umfasst:
- ein Sensor mit einer Messelektrode;
- eine leitende Bodenplatte geeignet zum Anordnen von mindestens einem Flüssigkeitsbehälter oder einer Trägereinheit mit mindestens einer Aufnahme zum Aufnehmen eines Flüssigkeitsbehälters, insbesondere eines Probenröhrchens;
- eine Sensorelektronikeinheit, welche mit der Messelektrode und der Bodenplatte verbunden ist und zum Bestimmen einer Impedanz, insbesondere einer Kapazität (d.h. des Imaginärteils der komplexwertigen Impedanz), zwischen der Messelektrode und der Bodenplatte ausgeführt ist; und
- eine Auswerteeinheit,
   wobei
- die Messelektrode im Wesentlichen senkrecht zur Bodenplatte angeordnet ist, insbesondere vertikal zur horizontal angeordneten Bodenplatte angeordnet ist;
- die Sensorelektronikeinheit ein Signalgenerator umfasst, mit welchem ein erstes Signal zum Anregen der Messelektrode mit einer ersten Frequenz und ein zweites Signal zum Anregen der Messelektrode mit einer zweiten Frequenz erzeugbar ist; und
- die Auswerteeinheit dazu ausgeführt ist, basierend auf der Impedanz, insbesondere der Kapazität, ein Vorhandensein von Schaum im Flüssigkeitsbehälter zu detektieren, falls eine Differenz zwischen einem ersten Messsignal beim Anregen der Messelektrode mit dem ersten Signal und einem zweiten Messsignal beim Anregen der Messelektrode mit dem zweiten Signal oder ein Verhältnis (Quotient) des ersten und zweiten Messsignals einen vorgegebenen Schwellwert übersteigt.

In einer Ausführungsvariante der Vorrichtung umfasst die Messelektrode mehrere Teilelektroden, welche in vertikaler Richtung übereinander angeordnet sind, und von denen jeweils eine einzelne oder gleichzeitig mehrere selektierbar mit der Sensorelektronikeinheit, insbesondere dem Signalgenerator, verbindbar sind.

In einer weiteren Ausführungsvariante der Vorrichtung ist die Messelektrode auf einer Vorderseite eines Sensorträgers oberhalb einer Guardelektrode angeordnet, wobei sich die Guardelektrode insbesondere zwischen der Messelektrode und der Bodenplatte befindet.

In einer weiteren Ausführungsvariante der Vorrichtung ist die Messelektrode auf einer Vorderseite eines Sensorträgers zwischen einer ersten und einer zweiten Guardelektrode angeordnet.

In einer weiteren Ausführungsvariante der Vorrichtung ist auf einer Hinterseite oder einer Zwischenschicht des Sensorträgers eine dritte Guardelektrode angeordnet, wobei die dritte Guardelektrode (von der Messelektrode sowie der ersten und zweiten Guardelektrode elektrisch isoliert ist und) mindestens die Messelektrode (von hinten) überdeckt, insbesondere die Messelektrode sowie die erste und zweite Guardelektrode überdeckt.

In einer weiteren Ausführungsvariante der Vorrichtung sind die Messelektrode sowie die erste und zweite Guardelektrode zwischen einer ersten und einer zweiten Masseelektrode angeordnet, wobei die erste und zweite Masseelektrode ihrerseits zwischen einer vierten und fünften Guardelektrode angeordnet sind, wobei die erste und zweite Masseelektrode elektrisch mit der Bodenplatte verbunden sind.

In einer weiteren Ausführungsvariante der Vorrichtung sind die Messelektrode, die allfälligen Guardelektroden und die allfälligen Masseelektroden streifenförmig ausgeführt, und sind beim Betrieb der Vorrichtung vertikal und insbesondere parallel zu einer Längsachse des Flüssigkeitsbehälters, insbesondere des Probenröhrchens, ausgerichtet.

In einer weiteren Ausführungsvariante der Vorrichtung weist die Messelektrode eine Breite im Bereich von 80 % bis 100 % des Durchmessers des Flüssigkeitsbehälters, insbesondere des Probenröhrchens, auf, und die erste und zweite Guardelektrode weisen insbesondere je eine Breite von über 100 % des Durchmessers des Flüssigkeitsbehälters, insbesondere des Probenröhrchens, auf. Die Probenröhrchen sind typischerweise zwischen 8 und 16 mm breit.

In einer weiteren Ausführungsvariante der Vorrichtung liegt die erste Frequenz in einem Bereich von 1 kHz bis 1 MHz, insbesondere in einem Bereich von 300 kHz bis 500 kHz, und die zweite Frequenz in einem Bereich von 1 MHz bis 50 MHz, insbesondere in einem Bereich von 10 MHz bis 15 MHz, wobei sowohl die erste wie auch die zweite Frequenz insbesondere unterschiedlich einstellbar sind.

In einer weiteren Ausführungsvariante der Vorrichtung sind das erste und zweite Signal sinusförmige Signale bei der ersten und zweiten Frequenz.

In einer weiteren Ausführungsvariante der Vorrichtung wird das Signal zum Anregen der Messelektrode ebenfalls zum Anregen der Guardelektroden verwendet, wobei das Signal zum Anregen der Guardelektroden niederohmig ist, und insbesondere mit einem Pufferverstärker mit Spannungsverstärkung 1 aus dem Signal zum Anregen der Messelektrode erzeugt wird.

In einer weiteren Ausführungsvariante der Vorrichtung ist der Sensorträger als Leiterplatte ausgeführt, insbesondere als mehrlagige Leiterplatte.

In einer weiteren Ausführungsvariante der Vorrichtung ist die Sensorelektronikeinheit auf derselben Leiterplatte untergebracht wie der Sensor, wobei die Leiterplatte mindesten zwei Zwischenschichten zwischen der Vorderseite und der Hinterseite aufweist, wobei sich die Messelektrode sowie die allfällige erste und zweite Guardelektrode sowie die allfällige erste und zweite Masseelektrode sowie die allfällige vierte und fünfte Guardelektrode auf der Vorderseite der Leiterplatte befinden, die allfällige dritte Guardelektrode sich auf einer ersten Zwischenschicht hinter der Vorderseite befindet, eine Massefläche als Abschirmung sich auf einer zweiten Zwischenschicht hinter der ersten Zwischenschicht befindet, wobei die Abschirmung mit der allfälligen ersten und zweiten Masseelektrode elektrisch verbunden ist, und Leiterbahnen für eine Signalführung der Sensorelektronikeinheit sich auf der Hinterseite und allenfalls einer oder mehrerer weiteren Zwischenschichten zwischen der Hinterseite und der Massenfläche befinden.

In einer weiteren Ausführungsvariante der Vorrichtung ist die Auswerteeinheit ferner dazu ausgeführt, basierend auf der Impedanz, insbesondere der Kapazität, mindestens eines aus folgender Liste zu erkennen:
- einen Füllstand des Flüssigkeitsbehälters, insbesondere des Probenröhrchens, insbesondere ob der Flüssigkeitsbehälter, insbesondere das Probenröhrchen, leer ist und/oder einen vorgegebenen Füllstand überschreitet;
- ob sich ein Flüssigkeitsbehälter, insbesondere ein Probenröhrchen, in der mindestens einen Aufnahme befindet;
- unterschiedliche Trägereinheiten, wie z.B. Trägereinheiten für unterschiedlich grosse Flüssigkeitsbehälter, insbesondere Probenröhrchen;
- unterschiedliche Merkmale an einer Trägereinheit, wie z.B. einzelne Aufnahmen, insbesondere Unterteilungen zwischen den Aufnahmen.

Eine alternative Lösung für eine erfindungsgemässe Vorrichtung zur kapazitiven Schaumdetektion in Flüssigkeitsbehältern, insbesondere Behälter (wie Tröge oder Fläschchen) für Reagenzien oder Probenröhrchen, umfasst:
- ein Sensor mit einer Messelektrode, welche koplanar auf einer horizontalen Bodenplatte angeordnet oder in der Bodenplatte integriert ist;
- eine zumindest teilweise leitende Trägereinheit mit mindestens einer Aufnahme zum Aufnehmen eines Flüssigkeitsbehälters, wobei die Trägereinheit insbesondere geerdet ist, beispielsweise kapazitiv mit einem Erdpotential gekoppelt ist;
- eine Sensorelektronikeinheit, welche mit der Messelektrode und der Trägereinheit verbunden ist und zum Bestimmen einer Impedanz, insbesondere einer Kapazität, zwischen der Messelektrode und der Trägereinheit ausgeführt ist; und
- eine Auswerteeinheit,
   wobei
- die Trägereinheit derart auf der Bodenplatte angeordnet ist, dass die Aufnahme über bzw. auf der Messelektrode liegt, und die Trägereinheit von der Messelektrode elektrisch isoliert ist;
- die Sensorelektronikeinheit ein Signalgenerator umfasst, mit welchem ein erstes Signal zum Anregen der Messelektrode mit einer ersten Frequenz und ein zweites Signal zum Anregen der Messelektrode mit einer zweiten Frequenz erzeugbar ist; und
- die Auswerteeinheit dazu ausgeführt ist, basierend auf der Impedanz, insbesondere der Kapazität, ein Vorhandensein von Schaum im Flüssigkeitsbehälter zu detektieren, falls eine Differenz zwischen einem ersten Messsignal beim Anregen der Messelektrode mit dem ersten Signal und einem zweiten Messsignal beim Anregen der Messelektrode mit dem zweiten Signal oder ein Verhältnis (Quotient) des ersten und zweiten Messsignals einen vorgegebenen Schwellwert übersteigt.

In einer Ausführungsvariante der alternativen Vorrichtung ist die Trägereinheit im Bereich der mindestens einen Aufnahme, z.B. in einem Bereich der Wandung der Aufnahme, leitend ausgeführt, und weist insbesondere eine (Gegen-) Elektrode (zur Messelektrode) auf.

In einer weiteren Ausführungsvariante der alternativen Vorrichtung ist die Messelektrode auf oder in einem Sensorträger angeordnet und von einer Guardelektrode umgeben, wobei die Messelektrode insbesondere rund ist und die Guardelektrode insbesondere ringförmig ist. Dabei sind die Messelektrode und die Guardelektrode insbesondere gemeinsam auf einer Unterseite oder einer Oberseite oder einer Zwischenschicht des Sensorträgers angeordnet.

In einer weiteren Ausführungsvariante der alternativen Vorrichtung ist auf oder in dem Sensorträger unterhalb der Messelektrode und der Guardelektrode eine weitere Guardelektrode angeordnet, wobei die weitere Guardelektrode (von der Messelektrode sowie der Guardelektrode elektrisch isoliert ist und) mindestens die Messelektrode (von unten) überdeckt, insbesondere die Messelektrode sowie die Guardelektrode überdeckt, wobei die weitere Guardelektrode insbesondere kreisförmig ist. Die weitere Guardelektrode kann beispielsweise auf der Unterseite des Sensorträgers angeordnet sein, währendem die Messelektrode und die Guardelektrode gemeinsam auf einer Oberseite oder einer Zwischenschicht des Sensorträgers angeordnet sind.

In einer weiteren Ausführungsvariante der alternativen Vorrichtung weist die Messelektrode dieselbe Form und dieselbe Grösse auf wie der grösste horizontale Querschnitt des Flüssigkeitsbehälters, insbesondere maximal dieselbe Grösse wie der grösste horizontale Querschnitt des Flüssigkeitsbehälters.

In einer weiteren Ausführungsvariante der alternativen Vorrichtung ist die Aufnahme zum Aufnehmen von mindestens 40 % des Flüssigkeitsbehälters ausgeführt, weist insbesondere eine Tiefe auf, die mindestens 40 % einer Höhe des Flüssigkeitsbehälters entspricht.

In einer weiteren Ausführungsvariante der alternativen Vorrichtung ist beim Betrieb der Vorrichtung eine vertikale Längsachse des Flüssigkeitsbehälters, welcher sich in der Aufnahme befindet, senkrecht zur Messelektrode ausgerichtet, und durchstösst insbesondere ein Zentrum der Messelektrode oder durchstösst in einem Umkreis des Zentrums mit einem Radius von bis zu 10 % einer maximalen Ausdehnung der Messelektrode die Messelektrode.

In einer weiteren Ausführungsvariante der alternativen Vorrichtung ist beim Betrieb der Vorrichtung der Flüssigkeitsbehälter, welcher sich in der Aufnahme befindet, über bzw. auf der Messelektrode angeordnet.

In einer weiteren Ausführungsvariante der alternativen Vorrichtung weist die Aufnahme in einem Bodenbereich der Trägereinheit eine Durchführung auf oder besteht ein Bodenbereich der Trägereinheit aus einem nichtleitenden Material, sodass der Bodenbereich nicht geerdet ist.

In einer weiteren Ausführungsvariante der alternativen Vorrichtung ist in einem seitlichen Bereich der Aufnahme mindestens ein nichtleitender Abstandshalter angeordnet, wobei der Abstandshalter insbesondere als Abstandshülse ausgeführt ist, welche den Flüssigkeitsbehälter vertikal teilweise oder vollständig umschliesst.

In einer weiteren Ausführungsvariante der alternativen Vorrichtung ist der Sensor mit der Trägereinheit verbunden, insbesondere an einem Boden der Trägereinheit fixiert.

In einer weiteren Ausführungsvariante der alternativen Vorrichtung liegt die erste Frequenz in einem Bereich von 1 kHz bis 1 MHz, insbesondere in einem Bereich von 300 kHz bis 500 kHz, und die zweite Frequenz in einem Bereich von 1 MHz bis 50 MHz, insbesondere in einem Bereich von 10 MHz bis 15 MHz, wobei sowohl die erste wie auch die zweite Frequenz insbesondere unterschiedlich einstellbar sind.

In einer weiteren Ausführungsvariante der alternativen Vorrichtung sind das erste und zweite Signal sinusförmige Signale bei der ersten und zweiten Frequenz.

In einer weiteren Ausführungsvariante der alternativen Vorrichtung wird das Signal zum Anregen der Messelektrode ebenfalls zum Anregen der Guardelektroden verwendet, wobei das Signal zum Anregen der Guardelektroden niederohmig ist, und insbesondere mit einem Pufferverstärker mit Spannungsverstärkung 1 aus dem Signal zum Anregen der Messelektrode erzeugt wird.

In einer weiteren Ausführungsvariante der alternativen Vorrichtung ist die Guardelektrode mittels eines Schalters wahlweise mit dem niederohmigen Signal zum Anregen der Guardelektrode oder mit einem Erdpotential verbindbar, d.h. die Guardelektrode kann auch geerdet werden, beispielsweise um die Dicke eines Bodens des Flüssigkeitsbehälters zu bestimmen.

In einer weiteren Ausführungsvariante der alternativen Vorrichtung ist der Sensorträger als Leiterplatte ausgeführt, insbesondere als mehrlagige Leiterplatte.

In einer weiteren Ausführungsvariante der alternativen Vorrichtung ist die Auswerteeinheit ferner dazu ausgeführt, basierend auf der Impedanz, insbesondere der Kapazität, mindestens eines aus folgender Liste zu erkennen:
- einen Füllstand des Flüssigkeitsbehälters, insbesondere ob der Flüssigkeitsbehälter leer ist und/oder einen vorgegebenen Füllstand überschreitet;
- ob sich ein Flüssigkeitsbehälter in der mindestens einen Aufnahme befindet;
- unterschiedliche Trägereinheiten, wie z.B. Trägereinheiten für unterschiedlich grosse Flüssigkeitsbehälter;
- unterschiedliche Merkmale an einer Trägereinheit, wie z.B. Art des Abstandshalters.

Gemäss einem weiteren Aspekt der vorliegenden Erfindung umfasst ein Verfahren zur kapazitiven Schaumdetektion in Flüssigkeitsbehältern, insbesondere Behälter für Reagenzien oder Probenröhrchen, die Schritte:
- Bereitstellen einer leitenden Bodenplatte, welche horizontal angeordnet ist, und eines Sensors mit einer Messelektrode, welche vertikal angeordnet ist, und einer Sensorelektronikeinheit, welche mit der Messelektrode und der Bodenplatte verbunden ist;
- Anordnen eines Flüssigkeitsbehälters oder einer Trägereinheit mit mindestens einer Aufnahme zum Aufnehmen eines Flüssigkeitsbehälters, insbesondere eines Probenröhrchens, auf der Bodenplatte neben der Messelektrode;
- Anregen der Messelektrode mit einem ersten Signal bei einer ersten Frequenz, insbesondere in einem Bereich von 1 kHz bis 1 MHz, bevorzugt in einem Bereich von 300 kHz bis 500 kHz;
- Bestimmen eines ersten Messsignals in Abhängigkeit einer Impedanz, insbesondere einer Kapazität, zwischen der Messelektrode und der Bodenplatte;
- Anregen der Messelektrode oder einer zweiten Messelektrode, welche mit der Sensorelektronikeinheit und der Bodenplatte verbunden ist, mit einem zweiten Signal bei einer zweiten Frequenz, insbesondere in einem Bereich von 1 MHz bis 50 MHz, bevorzugt in einem Bereich von 10 MHz bis 15 MHz;
- Bestimmen eines zweiten Messsignals in Abhängigkeit der Impedanz, insbesondere der Kapazität, zwischen der Messelektrode oder der zweiten Messelektrode und der Bodenplatte; und
- Ausgeben einer Kennung, die ein Vorhandensein von Schaum im Flüssigkeitsbehälter signalisiert, falls eine Differenz zwischen dem ersten und zweiten Messsignal oder ein Verhältnis (Quotient) des ersten und zweiten Messsignals einen vorgegebenen Schwellwert übersteigt.

Dabei können das erste und zweite Signal zum Anregen der Messelektrode mit der ersten und der zweiten Frequenz zeitgleich erzeugt (z.B. als ein Signal mit Frequenzanteilen bei der ersten und zweiten Frequenz) und an die Messelektrode angelegt werden (oder das erste und zweite Signal können zeitlich gestaffelt nacheinander erzeugt und an die Messelektrode angelegt werden). Alternativ ist es auch möglich gleichzeitig die Messelektrode mit dem ersten Signal anzuregen und mit dem zweiten Signal eine (unabhängige) zweite Messelektrode anzuregen, die von der (ersten) Messelektrode örtlich getrennt ist und beispielsweise (geometrisch) parallel neben der (ersten) Messelektrode angeordnet ist. Es sei angemerkt, dass das erste und zweite Signal nicht nur Signalanteile (genau) bei der ersten und der zweiten Frequenz aufweisen müssen, sondern nebst diesen Signalanteilen bei der ersten und der zweiten Frequenz zusätzliche Signalanteile bei anderen Frequenzen in der Nähe von oder in einem Frequenzbereich um die erste und die zweite Frequenz herum umfassen können.

In einer Ausführungsvariante des Verfahrens werden das erste und das zweite Signal zum Anregen der Messelektrode zeitgleich an die Messelektrode angelegt, und das erste und zweite Messsignal zeitgleich bestimmt.

In einer Ausführungsvariante umfasst das Verfahren weiter den Schritt:
- Bewegen einer Trägereinheit mit einer Vielzahl von Aufnahmen zum Aufnehmen von Probenröhrchen in horizontaler Richtung an der Messelektrode vorbei,
wobei das Bestimmen des Messsignals während dem Bewegen der Trägereinheit an der Messelektrode vorbei geschieht.

In einer weiteren Ausführungsvariante des Verfahrens umfasst die Messelektrode mehrere Teilelektroden, welche in vertikaler Richtung übereinander angeordnet sind, und das Anregen der Messelektrode mit dem ersten und zweiten Signal umfasst das Auswählen von mindestens einer Teilelektrode und das Anregen von nur der mindestens einen ausgewählten Teilelektrode.

Eine alternative Lösung für ein erfindungsgemässes Verfahren zur kapazitiven Schaumdetektion in Flüssigkeitsbehältern, insbesondere Behälter für Reagenzien oder Probenröhrchen, umfasst die Schritte:
- Anordnen eines Sensors mit einer Messelektrode auf einer horizontalen Bodenplatte, wobei die Messelektrode koplanar auf der Bodenplatte angeordnet oder in der Bodenplatte integriert ist;
- Anordnen einer zumindest teilweise leitenden Trägereinheit mit mindestens einer Aufnahme zum Aufnehmen eines Flüssigkeitsbehälters über bzw. auf der Messelektrode, wobei die Trägereinheit insbesondere geerdet ist, beispielsweise kapazitiv mit einem Erdpotential gekoppelt ist, und von der Messelektrode elektrisch isoliert ist;

- Anordnen eines Flüssigkeitsbehälters in der Aufnahme;
- Bereitstellen einer Sensorelektronikeinheit, welche mit der Messelektrode und der Trägereinheit verbunden ist;
- Anregen der Messelektrode mit einem ersten Signal bei einer ersten Frequenz, insbesondere in einem Bereich von 1 kHz bis 1 MHz, bevorzugt in einem Bereich von 300 kHz bis 500 kHz;
- Bestimmen eines ersten Messsignals in Abhängigkeit einer Impedanz, insbesondere einer Kapazität, zwischen der Messelektrode und der Trägereinheit;
- Anregen der Messelektrode oder einer zweiten Messelektrode, welche mit der Sensorelektronikeinheit und der Trägereinheit verbunden ist, mit einem zweiten Signal bei einer zweiten Frequenz, insbesondere in einem Bereich von 1 MHz bis 50 MHz, bevorzugt in einem Bereich von 10 MHz bis 15 MHz, wobei sowohl die erste wie auch die zweite Frequenz insbesondere unterschiedlich einstellbar sind;
- Bestimmen eines zweiten Messsignals in Abhängigkeit der Impedanz, insbesondere der Kapazität, zwischen der Messelektrode oder der zweiten Messelektrode und der Trägereinheit; und
- Ausgeben einer Kennung, die ein Vorhandensein von Schaum im Flüssigkeitsbehälter signalisiert, falls eine Differenz zwischen dem ersten Messsignal und dem zweiten Messsignal oder ein Verhältnis (Quotient) des ersten und zweiten Messsignals einen vorgegebenen Schwellwert übersteigt.

Dabei können das erste und zweite Signal zum Anregen der Messelektrode mit der ersten und der zweiten Frequenz zeitgleich erzeugt (z.B. als ein Signal mit Frequenzanteilen bei der ersten und zweiten Frequenz) und an die Messelektrode angelegt werden (oder das erste und zweite Signal können zeitlich gestaffelt nacheinander erzeugt und an die Messelektrode angelegt werden). Alternativ ist es auch möglich gleichzeitig die Messelektrode mit dem ersten Signal anzuregen und mit dem zweiten Signal eine (unabhängige) zweite Messelektrode anzuregen, die von der (ersten) Messelektrode örtlich getrennt ist und beispielsweise neben der (ersten) Messelektrode angeordnet ist. Es sei angemerkt, dass das erste und zweite Signal nicht nur Signalanteile (genau) bei der ersten und der zweiten Frequenz aufweisen müssen, sondern nebst diesen Signalanteilen bei der ersten und der zweiten Frequenz zusätzliche Signalanteile bei anderen Frequenzen in der Nähe von oder in einem Frequenzbereich um die erste und die zweite Frequenz herum umfassen können.

In einer Ausführungsvariante des alternativen Verfahrens werden das erste und das zweite Signal zum Anregen der Messelektrode zeitgleich an die Messelektrode angelegt, und das erste und zweite Messsignal zeitgleich bestimmt.

Gemäss einem weiteren Aspekt der vorliegenden Erfindung können die vorgeschlagenen Verfahren auch zum Bestimmen einer Art der Flüssigkeit, insbesondere einer Art des Reagenzes, welche sich im Flüssigkeitsbehälter befindet, verwendet werden.

### KURZE BESCHREIBUNG DER ZEICHNUNGEN

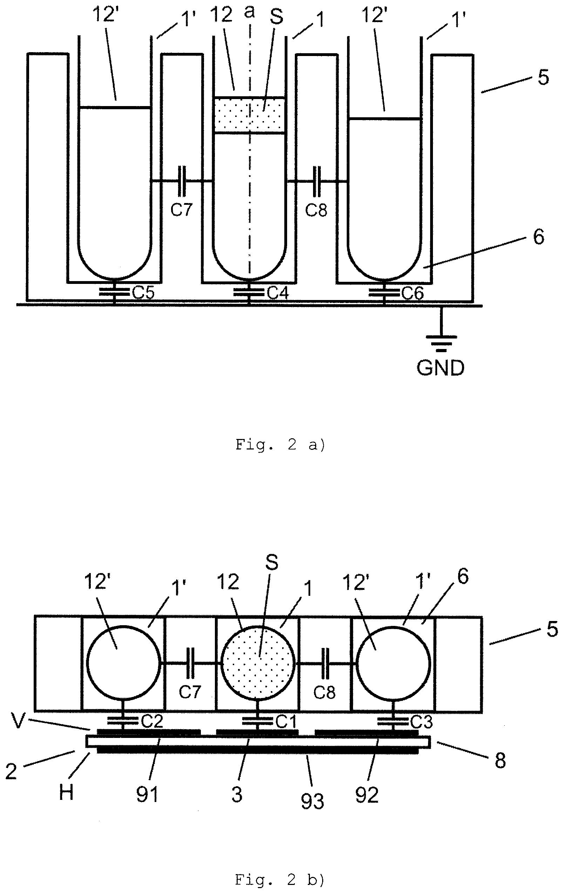

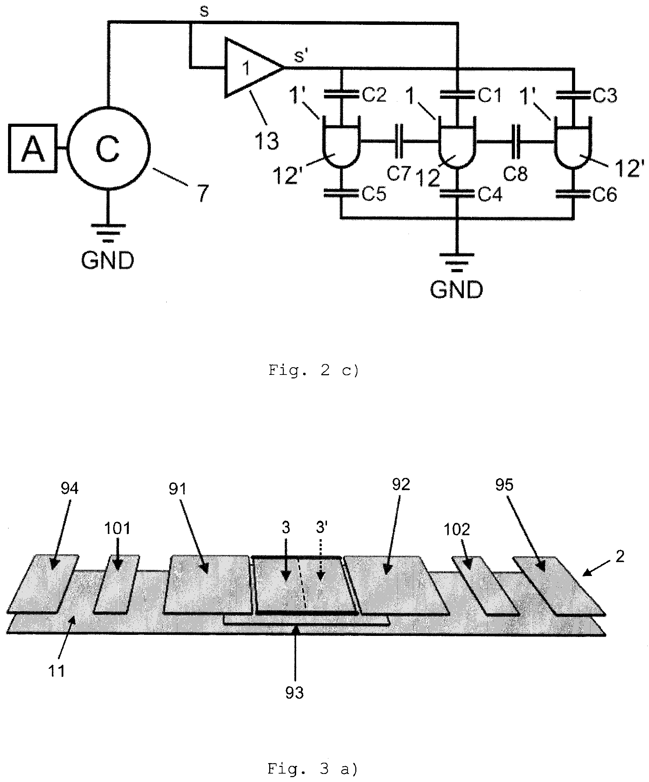

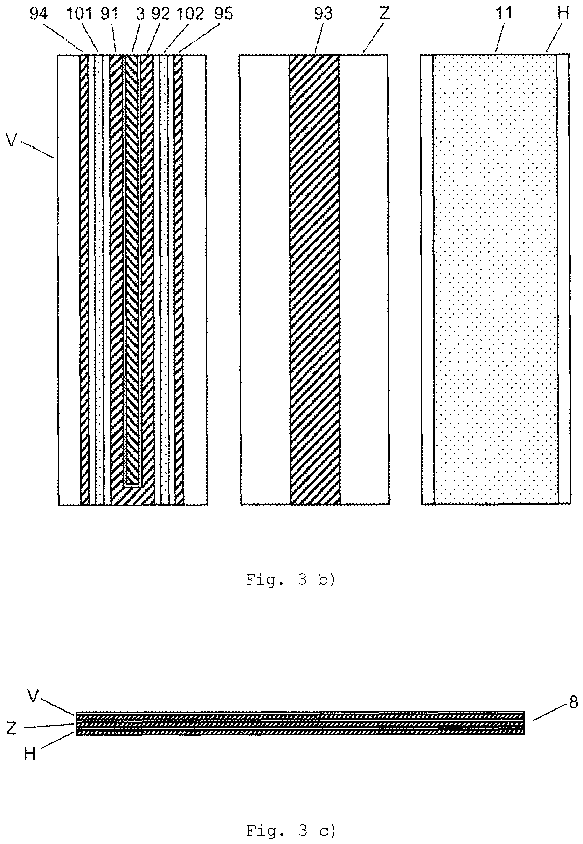

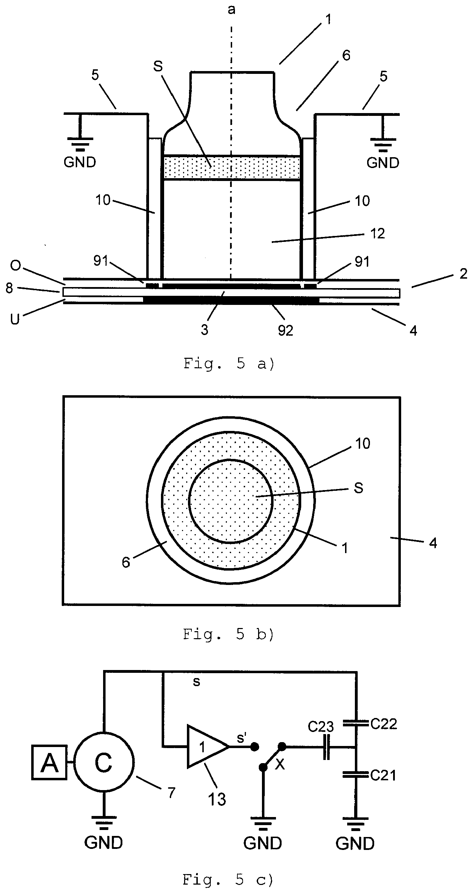

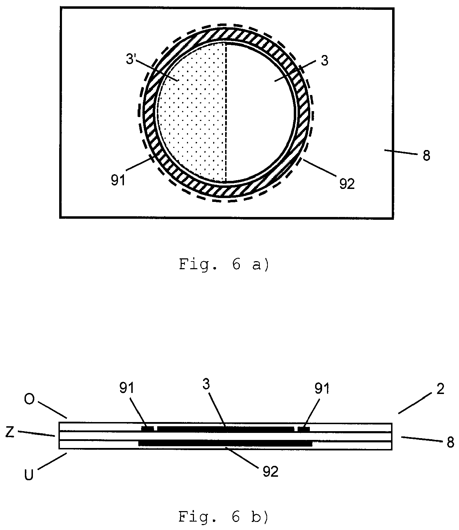

Nichtlimitierende Ausführungsbeispiele der vorliegenden Erfindung werden nachstehend anhand von Figuren noch näher erläutert. Es zeigen:
Fig. 1
   a) schematisch in einer Seitenansicht eine Ausführungsvariante einer erfindungsgemässen Vorrichtung zur kapazitiven Schaumdetektion,
   b) schematisch in einer Seitenansicht eine weitere Ausführungsvariante einer erfindungsgemässen Vorrichtung zur kapazitiven Schaumdetektion;
Fig. 2
   a) schematisch in einer Seitenansicht eine Trägereinheit mit mehreren Probenröhrchen,
   b) schematisch in einer Ansicht von oben eine Ausführungsvariante einer erfindungsgemässen Vorrichtung zur kapazitiven Schaumdetektion in den Probenröhrchen gemäss Fig. 2 a),
   c) schematische Darstellung inklusive Andeutung der elektrischen Ersatzschaltung der Ausführungsvariante gemäss Fig. 2 a) & b);
Fig. 3
   a) eine weitere Ausführungsvariante eines erfindungsgemässen Sensors,
   b) Ansicht der Vorderseite (links) sowie der Zwischenschicht und der Massefläche (rechts) des Sensors gemäss Fig 3 a),
   c) Seitenprofil des Sensors gemäss Fig. 3 a) & b) mit der Vorderseite, der Zwischenschicht und dahinter der Schicht mit der Massefläche;

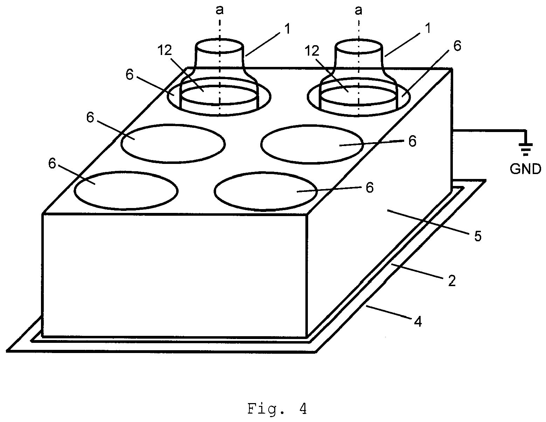

Fig. 4 schematisch in einer perspektivischen Ansicht eine Ausführungsvariante einer erfindungsgemässen alternativen Vorrichtung zur kapazitiven Schaumdetektion;
Fig. 5
   a) schematisch ein seitlicher Querschnitt eines Flüssigkeitsbehälters in einer Trägereinheit auf einem Sensor gemäss einer alternativen Ausführungsvariante der Erfindung,
   b) schematisch in einer Ansicht von oben die Ausführungsvariante gemäss Fig. 5 a),
   c) elektrische Ersatzschaltung der Ausführungsvariante gemäss Fig. 5 a) & b);
Fig. 6
   a) eine Ansicht von oben einer alternativen Ausführungsvariante eines erfindungsgemässen Sensors, und
   b) ein Querschnitt des Sensors gemäss Fig 6 a).

In den Figuren stehen gleiche Bezugszeichen für gleiche Elemente.

### DETAILLIERTE BESCHREIBUNG DER ERFINDUNG

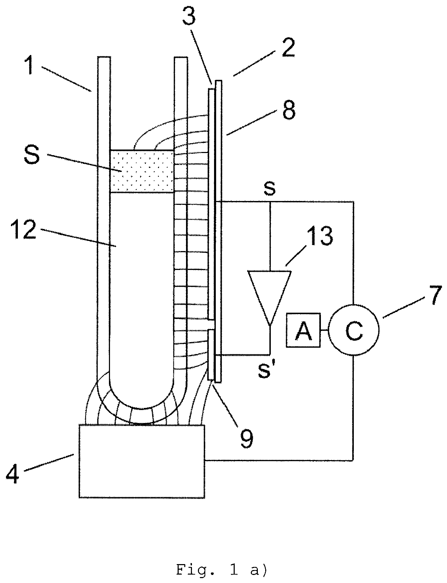

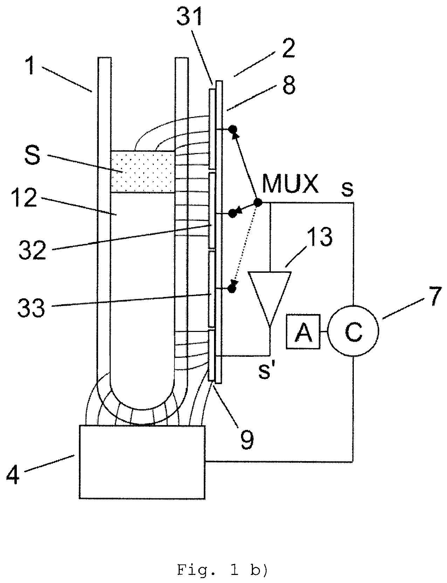

Fig. 1 a) zeigt schematisch in einer Seitenansicht eine beispielhafte Ausführungsvariante einer erfindungsgemässen Anordnung zur kapazitiven Schaumdetektion. Dazu wird ein Flüssigkeitsbehälter, hier ein Probenröhrchen 1 über einer leitenden, horizontalen Bodenplatte (bzw. Arbeitsfläche) 4 und neben einem Sensor 2 mit einer Messelektrode 3 angeordnet. Die Messelektrode 3 und die Bodenplatte 4 sind mit einer Sensorelektronikeinheit 7 verbunden, welche zum Bestimmen der Impedanz, insbesondere der Kapazität (d.h. des Imaginärteils der komplexwertigen Impedanz), zwischen der Messelektrode 3 und der Bodenplatte 4 ausgeführt ist. Typischerweise ist die Bodenplatte 4 geerdet bzw. liegt auf einem Referenzpotential. Um die Kapazität zu messen wird die Messelektrode 3 mit einem Signal s, welches von einem

Signalgenerator in der Sensorelektronikeinheit 7 erzeugt wird, angeregt. Aufgrund des Signals s bildet sich ein elektrisches Feld zwischen der Messelektrode 3 und der Bodenplatte 4, wobei die Feldlinien durch die Flüssigkeit 12 hindurchgeleitet werden. Je nach der Menge der Flüssigkeit 12 im Probenröhrchen 1, also je nach Füllstand, verändert sich die gemessene Kapazität.

Die vorliegende Erfindung beruht auf der Erkenntnis, dass bei Anregung der Messelektrode 3 mit einer tiefen Frequenz, z.B. im Bereich von 1 kHz bis 1 MHz, Schaum S, welcher sich auf der Oberfläche der Flüssigkeit 12 befindet, die gemessene Kapazität erhöht (im Vergleich zur selben Messung, wenn kein Schaum S vorhanden ist) und somit in Bezug auf den Füllstand miterfasst wird. Dagegen wird bei Anregung der Messelektrode 3 mit einer hohen Frequenz, z.B. im Bereich von 10 MHz bis 15 MHz (also beispielsweise mit einer um einen Faktor 10 bis 100 höheren Frequenz), der Schaum S sich kaum mehr auf die gemessene Kapazität auswirken, und ist daher in Bezug auf den Füllstand vernachlässigbar. Folglich erscheint der Schaum S bei einer tiefen Anregungsfrequenz als Teil der Flüssigkeit 12 und bei einer hohen Anregungsfrequenz erscheint der Schaum S nicht mehr als Teil der Flüssigkeit, womit der Füllstand, welcher bei der tiefen Frequenz gemessen wird, höher ist, als der Füllstand, welcher bei der hohen Frequenz gemessen wird. Folglich kann zumindest die Anwesenheit von Schaum S z.B. basierend auf einem Vergleich der beiden gemessenen Füllstände detektiert werden. Es sei allerdings angemerkt, dass typischerweise selbst wenn kein Schaum vorhanden ist, bei gleichem effektivem Füllstand die beiden bei verschiedenen Frequenzen basierend auf der gemessenen Kapazität ermittelten Füllstände nicht identisch sein werden. Der Unterschied ist abhängig vom Impedanzspektrum der Flüssigkeit, d.h. von deren frequenzabhängigen Impedanz, bzw. von deren frequenzabhängigen Permittivität (auch dielektrische Leitfähigkeit genannt). Verschiedene Flüssigkeiten, wie z.B. Reagenzien haben verschiedene für sie charakteristische Impedanzspektren. Durch Messung und Vergleich der Kapazität zwischen der Messelektrode 3 und der Bodenplatte 4 bei Anregung der Messelektrode 3 mit einem Signal s mit einer tiefen und einer hohen Frequenz lässt sich folglich sowohl Schaum detektieren als auch die Art der Flüssigkeit 12 bestimmen. So kann beispielsweise Wasser, welches stark polar ist, eindeutig von Ethanol, das weiniger polar ist, unterschieden werden.

Fig. 1 b) veranschaulicht eine weitere Ausführungsvariante der Vorrichtung, wobei hier die Messelektrode aus mehreren Teilelektroden 31, 32, 33 besteht, welche in vertikaler Richtung übereinander angeordnet sind, und von denen jeweils eine einzelne oder gleichzeitig mehrere selektierbar mit der Sensorelektronikeinheit 7, insbesondere dem Signalgenerator und der Auswerteeinheit A, verbunden werden können. In Fig. 1 b) ist die unterste Teilelektrode 33 nicht mit der Sensorelektronikeinheit 7 verbunden (d.h. nicht selektiert). Dadurch wird das elektrische Feld gezielt in den Bereich mit Schaum S fokussiert, wodurch die Sensitivität der Schaumdetektion erhöht wird. Die einzelnen Teilelektroden 31, 32, 33 lassen sich z.B. über einen Multiplexing MUX sequentiell mit der Sensorelektronikeinheit 7 verbinden. Je nach Füllstand wird z.B. nur die oberste Teilelektrode 31 oder die mittlere Teilelektrode 32 oder beide (wie in Fig. 1 b) gezeigt) mit der Sensorelektronikeinheit 7 verbinden. Mit einer solchen Anordnung wird einerseits der Einfluss der Flüssigkeit (z.B. deren Leitfähigkeit) minimiert und andererseits die Empfindlichkeit für die Schaumdetektion maximiert.

Optional kann der Sensor 2 nebst der Messelektrode 3 zusätzlich eine Guardelektrode 9 umfassen, welche zusammen mit der Messelektrode 3 auf einem Sensorträger 8 angeordnet ist. Die Guardelektrode 9 wird mit einem niederohmigen Signal s' angeregt, welches durch Anlegen des Signals s an einen Pufferverstärker 13 mit Spannungsverstärkung 1 erzeugt werden kann. Mittels der Guardelektrode 9 kann das elektrische Feld in einer gewünschten Weise fokussiert werden, wodurch sichergestellt wird, dass die Feldlinien von der Messelektrode 3 durch die Flüssigkeit 12 geführt und nicht direkt in die Bodenplatte 4 geleitet werden, was die Genauigkeit der Füllstandsmessung erhöht.

Der in Fig. 1 dargestellte Sensor 2 eignet sich gut, wenn jeweils nur ein einzelner Flüssigkeitsbehälter, wie z.B. ein Trog oder Fläschchen mit einem Reagenz oder Reinigungsmittel, vor die beschriebene Elektrodenanordnung gestellt wird, um dessen Füllstand zu ermitteln oder um Schaum S zu detektieren. Werden hingegen mehrere, nahebeieinander angeordnete Flüssigkeitsbehälter, wie z.B. eine Vielzahl von Probenröhrchen 1 in einer Trägereinheit (Rack) 5, zusammen am Sensor 2 vorbeigeführt, so wird ein Teil der Feldlinien von der Messelektrode 3 durch die Flüssigkeit 12' der benachbarten Probenröhrchen 1' geführt, wodurch die Messung des Füllstands des gewünschten Probenröhrchen 1 durch den Füllstand der benachbarten Probenröhrchen 1' verfälscht werden kann. Auch die Schaumdetektion wird dadurch beeinträchtigt.

In Fig. 2 wird eine Ausführungsvariante eines erfindungsgemässen Sensors 2 gezeigt, welcher das oben beschriebene Problem gelöst, indem das von benachbarten Probenröhrchen 1' verursachte "Übersprechen" stark vermindert wird.

Fig. 2 a) zeigt schematisch in einer Seitenansicht eine Trägereinheit 5 mit mehreren Probenröhrchen 1, welche alle Flüssigkeit 12, 12' enthalten. Der Sensor 2 ist in dieser Darstellung nicht sichtbar, steht jedoch vor den drei abgebildeten Probenröhrchen 1, 1' deren Längsachse a senkrecht zur horizontalen Bodenplatte 4 steht. In Fig. 2b) wird diese Anordnung von oben gezeigt, hier mit dem Sensor 2. Wie man nun sehen kann, liegt bei diesem Sensor 2 die Messelektrode 3 zwischen zwei Guardelektroden 91, 92, welche links und rechts der Messelektrode 3 angeordnet sind. Die Messelektrode 3 sowie die beiden Guardelektroden 91, 92 sind auf der Vorderseite V einer Leiterplatte, die als Sensorträger 8 dient, angeordnet. Auf der Hinterseite H des Sensorträgers 8 ist eine weitere Guardelektrode 93 angeordnet, welche von hinten sowohl die Messelektrode 3 als auch die beiden vorderen Guardelektroden 91, 92 überdeckt. Durch diese Elektrodenanordnung entsteht ein elektrisches Feld, welches einerseits die Messelektrode 3 mit der Flüssigkeit 12 im davor stehenden Probenröhrchen 1 koppelt (angedeutet durch die Kapazität C1) und die beiden seitlichen Guardelektroden 91, 92 mit der Flüssigkeit 12' in den vor ihnen stehenden Probenröhrchen 1' koppelt (angedeutet durch die Kapazitäten C2 & C3) und andererseits die Flüssigkeit 12, 12' in den drei Probenröhrchen 1, 1' mit der geerdeten Bodenplatte 4 koppelt (angedeutet durch die Kapazitäten C4, C5 & C6). Trotz der Guardelektroden 91, 92 wird immer noch ein kleiner Teil des elektrischen Feldes von der Flüssigkeit 12' in den beiden seitlichen Probenröhrchen 1' in die Flüssigkeit 12 im mittleren Probenröhrchen 1, dessen Füllstand zu messen ist, oder die Anwesenheit von Schaum S darin detektiert werden soll, eingestreut (angedeutet durch die Kapazitäten C7 & C8). Die Kapazitäten C7 & C8 sind allerdings vergleichsweise klein gegenüber der Kapazität C1+C4.

Fig. 2 c) zeigt eine schematische Darstellung inklusive Andeutung der elektrischen Ersatzschaltung der Ausführungsvariante gemäss Fig. 2 a) & b) mit der Sensorelektronikeinheit 7, welche einen Signalgenerator enthält, der das Signal s zum Anregen der Messelektrode 3 liefert, sowie dem Pufferverstärker 13 mit Verstärkung 1, welcher dieses Signal s als niederohmiges Signal s' den beiden Guardelektroden 91, 92 zuführt.

Um das "Übersprechen" bzw. die Verkopplung der Probenröhrchen 1, 1' (bzw. der darin befindlichen Flüssigkeiten 12, 12') weiter zu reduzieren, wird die in Fig. 3 illustrierte Ausführungsvariante vorgeschlagen.

In der Fig. 3 a) wird ein streifenförmiger Ausschnitt des Sensors 2 in einer perspektivischen Darstellung gezeigt. Bei dieser Ausführungsvariante sind zusätzliche auf der Vorderseite V des Sensorträgers 8 je links und rechts der Messelektrode 3 und der beiden Guardelektroden 91, 92 eine Masseelektrode 101, 102 und eine weitere Guardelektrode 94, 95 angeordnet. Durch die gezeigte Anordnung der beiden seitlichen Masseelektrode 101, 102 werden im elektrischen Feld zwischen den drei Proberöhrchen 1, 1' Nullstellen erzeugt. Mit der gestrichelten Linie auf der Messelektrode 3 in Fig. 3 a) wird angedeutet, dass neben der (ersten) Messelektrode 3 eine zweite, unabhängige (d.h. elektrische getrennte) Messelektrode 3' eingesetzt werden kann, wobei diese z.B. mit einer anderen Frequenz als die erste Messelektrode 3 angeregt wird.

In der Abbildung von Fig. 3 b) sind in einer Ansicht von vorne auf der linken Seite die vollständige Vorderseite V des Sensorträgers 8 dargestellt mit der linken, äusseren Guardelektrode 94, der linken Masseelektrode 101, der linken, inneren Guardelektrode 91, der Messelektrode 3, der rechten, inneren Guardelektrode 92, der rechten Masseelektrode 102 sowie der rechten, äusseren Guardelektrode 95, welche allesamt streifenförmig ausgeführt sind, in der Mitte die Zwischenschicht Z mit der Guardelektrode 93, und auf der rechten Seite die Hinterseite H mit der Massefläche 11. Die Länge der Elektrodenstreifen entspricht in etwa der Höhe der Probenröhrchen 1. Als Detail sei noch zu beachten, das sich am unteren Ende der Messelektrode 3 noch ein Stück Guardelektrode 9 befindet, wie dies auch in Fig. 1 gezeigt wird, um sicherzustellen, dass die Feldlinien des elektrischen Feldes von der Messelektrode 3 via die Flüssigkeit 12 im Probenröhrchen 1 zur Bodenplatte 4 gelangen und nicht direkt von der Messelektrode 3 zur Bodenplatte 4 verlaufen und die Flüssigkeit 12 im Probenröhrchen 1 umgehen, wodurch die Füllstandsmessung bzw. die Schaumdetektion verfälscht und somit ungenau resp. unzuverlässig würde.

Fig. 3 c) zeigt noch ein (um 90 Grad in die Horizontale gedrehtes) Seitenprofil des mehrlagigen Sensorträgers 2, welcher z.B. als mehrlagige Leiterplatte ausgeführt ist, mit der Vorderseite V mit den sieben streifenförmigen Elektroden 94, 101, 91, 3, 92, 102 & 95, der Zwischenschicht Z mit der breiten streifenförmigen Guardelektrode 93 und der Hinterseite H mit der noch breiteren Massefläche 11, welche alle vor ihr liegenden Elektrodenstreifen von hinten überdeckt.

Fig. 4 illustriert schematisch in einer perspektivischen Ansicht eine alternative Ausführungsvariante einer erfindungsgemässen Vorrichtung zur kapazitiven Schaumdetektion. Eine leitende Trägereinheit 5 mit sechs Aufnahmen 6 zum Aufnehmen von Flüssigkeitsbehältern 1, wobei sich nur in den beiden hinteren Aufnahmen 6 Flüssigkeitsbehälter 1 mit einer Flüssigkeit 12 wie z.B. ein Reagenz befinden, ist auf einer horizontalen Bodenplatte 4 angeordnet. Zwischen der Bodenplatte 4 und der Trägereinheit 5 liegt ein Sensor 2 mit einer Messelektrode 3. Die Längsachsen a der beiden Flüssigkeitsbehälter 1 sind vertikal, d.h. senkrecht zum Sensor 2 ausgerichtet. Die Trägereinheit 5 ist geerdet, bzw. kapazitiv mit Erdpotential GND gekoppelt. Die Messelektrode 3 ist von der Trägereinheit 5 elektrisch isoliert. Die Messelektrode 3 und die Trägereinheit 5 sind mit einer Sensorelektronikeinheit (s. 7 in Fig. 5 c)) verbunden, um die Kapazität zwischen der Messelektrode 3 und der Trägereinheit 5 zu bestimmen.

Analog wie bei der Ausführungsvariante gemäss Fig. 1 b) lässt sich durch Messung und Vergleich der Kapazität zwischen der Messelektrode 3 und der Trägereinheit 5 bei Anregung der Messelektrode 3 mit einem Signal s mit einer tiefen und einer hohen Frequenz sowohl Schaum S detektieren als auch die Art der Flüssigkeit 12 bestimmen.

Fig. 5 a) zeigt schematisch ein seitlicher Querschnitt eines Flüssigkeitsbehälters 1 in einer Trägereinheit 6 auf einem Sensor 2 gemäss einer Ausführungsvariante der Erfindung. Der Sensor 2 besteht in dieser Ausführungsvariante aus einer runden Messelektrode 3, einer ersten, ringförmigen Guardelektrode 91 und einer zweiten, runden Guardelektrode 92. Die Messelektrode 3 ist dabei von der ringförmigen Guardelektrode 91 umgeben. Beide befinden sich auf der Oberseite O eines Sensorträgers 8, beispielsweise einer Leiterplatte. Die zweite Guardelektrode 92 befindet sich auf der Unterseite U des Sensorträgers 8 und überdeckt sowohl die Messelektrode 3 wie auch die Guardelektrode 91 von unten (d.h. hinter bzw. unterhalb der Messelektrode 3 und der Guardelektrode 91 aus Sicht der Trägereinheit 5). Der Sensorträger 8 liegt auf der Bodenplatte 4, wobei die Trägereinheit 5 derart über dem Sensor 2 angeordnet ist, dass sich die Aufnahme 6 über der Messelektrode 3 befindet. Idealerweise durchstösst dabei die Längsachse a des Flüssigkeitsbehälters 1, welcher sich in der Aufnahme 6 befindet, das Zentrum der kreisförmigen Messelektrode 3. Die geerdete Trägereinheit 5 muss vom Sensor 2 elektrisch isoliert sein. Um dies sicherzustellen, befindet sich z.B. auf die Oberfläche O des Sensorträgers 8 eine Isolationsschicht (in Fig. 5 a) nicht gezeigt; s. dazu Fig. 6 b)). Ferner kann im seitlichen Bereich bzw. an der Wandung der Aufnahme 6 ein nichtleitender Abstandshalter 10 angeordnet werden, wobei der Abstandshalter 10 beispielsweise als Abstandshülse ausgeführt ist, die den Flüssigkeitsbehälter 1 vertikal teilweise oder vollständig umschliesst. Eine solche, den Flüssigkeitsbehälter 1 vertikal vollständig umschliessende Abstandshülse (bzw. Isolationshülse/-ring) 10 ist in der Fig. 6 b) dargestellt, welche die Ausführungsvariante gemäss Fig. 6 a) in einer Ansicht von oben zeigt. Der Isolationsring 10 hat zwei positive Effekte. Einerseits wirken sich Toleranzen/Abweichungen des Aussendurchmessers eines Flüssigkeitsbehälters 1 und des Innendurchmessers einer Aufnahme 6 sowie die Position des Flüssigkeitsbehälters 1 innerhalb der Aufnahme 6 weniger stark auf die Messergebnisse aus. Anderseits wird durch den Isolationsring 10 verhindert, dass kondensierte Feuchtigkeit an der Aussenseite eines gekühlten Flüssigkeitsbehälters 1 (wie z.B. einem Reagenzienbehälter) ein galvanischer Kontakt zur Trägereinheit 5 herstellt und damit die Messungen verfälscht.

Fig. 5 c) stellt eine elektrische Ersatzschaltung der Ausführungsvariante gemäss Fig. 5 a) & b) dar. Die Trägereinheit 5 und die im rechten Winkel dazu angeordnete Messelektrode 3 bilden zusammen einen Kondensator, dessen Kapazität vom Füllstand der Flüssigkeit 12 im Flüssigkeitsbehälter 1 abhängig ist (d.h. je höher der Füllstand desto grösser die Kapazität). Die Kapazität setzt sich aus zwei Teilkapazitäten C21 und C22 zusammen, wobei C21 der Kapazität zwischen der Trägereinheit 5 und der Flüssigkeit 12 und C22 der Kapazität zwischen der Flüssigkeit 12 und der Messelektrode 3 entspricht. C21 verändert sich bei einem zylindrischen Flüssigkeitsbehälter 1 linear mit dem Füllstand. C22 bleibt hingegen ab einer gewissen minimalen Füllmenge bei einer minimalen Leitfähigkeit der Flüssigkeit 12 und bei einem flachen Boden des Flüssigkeitsbehälters 1 unabhängig vom Füllstand konstant. Um die Kapazität zu messen wird die Messelektrode 3 mit einem Signal s, welches von einem Signalgenerator in der Sensorelektronikeinheit 7 erzeugt wird, angeregt. Aufgrund des Signals s bildet sich ein elektrisches Feld zwischen der Trägereinheit 5 und der Messelektrode 3, wobei die Feldlinien durch die Flüssigkeit 12 hindurchverlaufen. Je nach Menge der Flüssigkeit 12, die sich im Flüssigkeitsbehälter 1 befindet, also je nach Füllstand, ergibt sich eine bestimmte, messbare Kapazität. Mittels der ersten Guardelektrode 91 kann das elektrische Feld in einer gewünschten Weise fokussiert werden, wodurch sichergestellt wird, dass der überwiegende Teil des elektrischen Feldes von der Trägereinheit 5 durch die Flüssigkeit 12 in die Messelektrode 3 geführt wird und insbesondere im untersten Bereich der Aufnahme 6 nicht direkt von der Trägereinheit 5 in die Messelektrode 3 geleitet werden, wodurch die Genauigkeit der Füllstandsmessung erhöht wird. Die zweite Guardelektrode 92 dient ebenfalls dazu Randeffekte sowie äussere Störungen zu minimieren und so die Parasitärkapazität zu reduzieren. Die beiden Guardelektroden 91, 92 werden mit einem niederohmigen Signal s' angeregt, welches durch Anlegen des Signals s an einen Pufferverstärker 13 mit Spannungsverstärkung 1 erzeugt werden kann, wie dies in Fig. 5 c) dargestellt ist. Die Guardelektrode 91 kann über den Schalter X wahlweise mit dem niederohmigen Signal s' vom Pufferverstärker 13 oder mit dem Erdpotential GND verbunden werden. Wenn die Guardelektrode 91 geerdet ist, kann durch Messung der Kapazität C21+C23 die Dicke des Bodens des Flüssigkeitsbehälters 1 bestimmt werden.

In Fig. 6 a) ist der Sensor 2, welcher zur Füllstandsmessung bzw. zur Schaumdetektion in einem darüber angeordneten Flüssigkeitsbehälter 1 geeignet ist, in einer Ansicht von oben gezeigt. Hier ist deutlich zu sehen, wie die kreisförmige Messelektrode 3 von der ringförmigen ersten Guardelektrode 91 (schraffiert eingezeichnet) umgeben ist, wobei beide koplanar auf dem Sensorträger 8 angeordnet sind. Die zweite, kreisförmige Guardelektrode 92, welche sich unterhalb der Messelektrode 3 und der ersten Guardelektrode 91 auf der anderen Seite des Sensorträgers 8 befindet, ist gestrichelt angedeutet. Die zweite Guardelektrode 92 überlappt die erste Guardelektrode 91 und deckt die Messelektrode 3 sowie die erste Guardelektrode 91 vollständig von unten bzw. hinten ab. Dies ist deutlich im Querschnitt des Sensors 2 in Fig. 6 b) zu sehen. In der Ausführungsvariante gemäss Fig. 6 b) sind die Messelektrode 3 sowie die erste Guardelektrode 91 auf einer Seite einer Zwischenschicht Z des Sensorträgers 8 aufgebracht, und die zweite Guardelektrode 92 ist auf der anderen Seite der Zwischenschicht Z aufgebracht. Beide Seiten der Zwischenschicht Z sind je mit einer Schutzschicht, beispielsweise aus einem elektrisch isolierenden Material, überzogen. Diese Schutzschichten bilden die Oberseite O und die Unterseite U des Sensors 2.

Mit der gestrichelten Linie auf der Messelektrode 3 in Fig. 6 a) wird angedeutet, dass neben der (ersten, halbkreisförmigen) Messelektrode 3 eine zweite, unabhängige (d.h. elektrische getrennte, gepunktet dargestellte halbkreisförmige) Messelektrode 3' eingesetzt werden kann, wobei diese z.B. mit einer anderen Frequenz als die erste Messelektrode 3 angeregt wird.

Der Sensor 2 kann als separate Einheit auf der Bodenplatte 4 angeordnet und z.B. aufgeklebt werden, oder in der Bodenplatte 4 integriert sein. Alternativ kann der Sensor 2 auch an der Trägereinheit 5 angebracht sein, sodass die Trägereinheit 5 zusammen mit dem Sensor 2 eine Einheit bildet, in welche möglicherweise auch die Sensorelektronikeinheit 7 integriert ist, um eine vollständige Vorrichtung zur kapazitiven Füllstandsmessung von Flüssigkeitsbehältern, die in die Aufnahme(n) 6 der Trägereinheit 5 hineingestellt werden, bereitzustellen. Der Sensor 2 kann selbstverständlich mehrere Messelektroden 3 mit zugehörigen Guardelektrode 91, 92 aufweisen, z.B. eine pro Aufnahme 6 in der Trägereinheit 5.

Die Trägereinheit 5 muss nicht vollständig aus leitendem Material bestehen. So können z.B. leitende Elektroden im Bereich der Aufnahme(n) 6 eingesetzt werden, welche geerdet sind.

Anstatt die Trägereinheit 5 mit Erdpotential GND zu verbinden (also zu erden), kann natürlich auch umgekehrt die Messelektrode 3 mit Erdpotential verbunden sein, wobei dadurch lediglich festgelegt wird, wo sich das Referenzpotential für die Kapazitätsmessung befindet.

### LISTE DER BEZUGSZEICHEN

- 1, 1': Flüssigkeitsbehälter, Trog, Probenröhrchen
- 2: Sensor
- 3: (erste) Messelektrode
- 3': zweite Messelektrode
- 31: erste Teilelektrode der Messelektrode
- 32: zweite Teilelektrode der Messelektrode
- 33: dritte Teilelektrode der Messelektrode
- 4: Bodenplatte
- 5: Trägereinheit
- 6: Aufnahme
- 7: Sensorelektronikeinheit
- 8: Sensorträger
- 9: Guardelektrode
- 91: erste Guardelektrode
- 92: zweite Guardelektrode
- 93: dritte Guardelektrode
- 94: vierte Guardelektrode
- 95: fünfte Guardelektrode
- 101: erste Masseelektrode
- 102: zweite Masseelektrode
- 10: Abstandshalter/-hülse, Isolationsring
- 11: Massefläche
- 12, 12': Flüssigkeit
- 13: Pufferverstärker
- A: Auswerteeinheit
- a: Längsachse eines Probenröhrchens
- C1...C8: (Teil-) Kapazität
- C21...C23: (Teil-) Kapazität
- GND: Ground, Erdpotential
- H: Hinterseite des Sensorträgers
- K: Kennzeichen
- MUX: Multiplexer
- O: Oberseite des Sensorträgers
- p: Einschubpfad der Trägereinheit
- S: Schaum
- s: Signal zum Anregen der Messelektrode
- s': Signal zum Anregen der Guardelektroden
- sc: Steuersignal
- U: Unterseite des Sensorträgers
- V: Vorderseite des Sensorträgers
- X: Schalter
- Z: Zwischenschicht des Sensorträgers

## Patentansprüche

1. Vorrichtung zur kapazitiven Schaumdetektion in Flüssigkeitsbehältern (1), insbesondere Behälter für Reagenzien oder Probenröhrchen, umfassend:
- ein Sensor (2) mit einer Messelektrode (3);
- eine leitende Bodenplatte (4) geeignet zum Anordnen von mindestens einem Flüssigkeitsbehälter (1) oder einer Trägereinheit (5) mit mindestens einer Aufnahme (6) zum Aufnehmen eines Flüssigkeitsbehälters (1), insbesondere eines Probenröhrchens;
- eine Sensorelektronikeinheit (7), welche mit der Messelektrode (3) und der Bodenplatte (4) verbunden ist und zum Bestimmen einer Impedanz, insbesondere einer Kapazität, zwischen der Messelektrode (3) und der Bodenplatte (4) ausgeführt ist; und
- eine Auswerteeinheit (A),
wobei
- die Messelektrode (3) im Wesentlichen senkrecht zur Bodenplatte (4) angeordnet ist, insbesondere vertikal zur horizontal angeordneten Bodenplatte (4) angeordnet ist;
- die Sensorelektronikeinheit (7) ein Signalgenerator umfasst, mit welchem ein erstes Signal zum Anregen der Messelektrode (3) mit einer ersten Frequenz und ein zweites Signal zum Anregen der Messelektrode (3) mit einer zweiten Frequenz erzeugbar ist; und
- die Auswerteeinheit (A) dazu ausgeführt ist, basierend auf der Impedanz, insbesondere der Kapazität, ein Vorhandensein von Schaum (S) im Flüssigkeitsbehälter (1) zu detektieren, falls eine Differenz zwischen einem ersten Messsignal beim Anregen der Messelektrode (3) mit dem ersten Signal und einem zweiten Messsignal beim Anregen der Messelektrode (3) mit dem zweiten Signal oder ein Verhältnis des ersten und zweiten Messsignals einen vorgegebenen Schwellwert übersteigt.

2. Vorrichtung nach Anspruch 1, wobei die Messelektrode (3) mehrere Teilelektroden (31, 32, 33) umfasst, welche in vertikaler Richtung übereinander angeordnet sind, und von denen jeweils eine einzelne oder gleichzeitig mehrere selektierbar mit der Sensorelektronikeinheit (7), insbesondere dem Signalgenerator, verbindbar sind.

3. Vorrichtung nach Anspruch 1 oder 2, wobei die Messelektrode (3) auf einer Vorderseite (V) eines Sensorträgers (8) oberhalb einer Guardelektrode (9) angeordnet ist, wobei sich die Guardelektrode (9) insbesondere zwischen der Messelektrode (3) und der Bodenplatte (4) befindet.

4. Vorrichtung nach Anspruch 1 oder 2, wobei die Messelektrode (3) auf einer Vorderseite (V) eines Sensorträgers (8) zwischen einer ersten und einer zweiten Guardelektrode (91, 92) angeordnet ist.

5. Vorrichtung nach Anspruch 4, wobei auf einer Hinterseite (H) oder einer Zwischenschicht (Z) des Sensorträgers (8) eine dritte Guardelektrode (93) angeordnet ist, wobei die dritte Guardelektrode (93) mindestens die Messelektrode (3) überdeckt, insbesondere die Messelektrode (3) sowie die erste und zweite Guardelektrode (91, 92) überdeckt.

6. Vorrichtung nach einem der Ansprüche 1 bis 5, wobei die erste Frequenz in einem Bereich von 1 kHz bis 1 MHz, insbesondere in einem Bereich von 300 kHz bis 500 kHz, liegt, und die zweite Frequenz in einem Bereich von 1 MHz bis 50 MHz, insbesondere in einem Bereich von 10 MHz bis 15 MHz, liegt, wobei sowohl die erste wie auch die zweite Frequenz insbesondere unterschiedlich einstellbar sind, und wobei das erste und zweite Signal insbesondere sinusförmige Signale sind.

7. Verfahren zur kapazitiven Schaumdetektion in Flüssigkeitsbehältern (1), insbesondere Behälter für Reagenzien oder Probenröhrchen, umfassend die Schritte:
- Bereitstellen einer leitenden Bodenplatte (4), welche horizontal angeordnet ist, und eines Sensors (2) mit einer Messelektrode (3), welche vertikal angeordnet ist, und einer Sensorelektronikeinheit (7), welche mit der Messelektrode (3) und der Bodenplatte (4) verbunden ist;
- Anordnen eines Flüssigkeitsbehälters (1) oder einer Trägereinheit (5) mit mindestens einer Aufnahme (6) zum Aufnehmen eines Flüssigkeitsbehälters (1), insbesondere eines Probenröhrchens, auf der Bodenplatte (4) neben der Messelektrode (3);
- Anregen der Messelektrode (3) mit einem ersten Signal bei einer ersten Frequenz, insbesondere in einem Bereich von 1 kHz bis 1 MHz, bevorzugt in einem Bereich von 300 kHz bis 500 kHz;
- Bestimmen eines ersten Messsignals in Abhängigkeit einer Impedanz, insbesondere einer Kapazität, zwischen der Messelektrode (3) und der Bodenplatte (4);
- Anregen der Messelektrode (3) oder einer zweiten Messelektrode (3'), welche mit der Sensorelektronikeinheit (7) und der Bodenplatte (4) verbunden ist, mit einem zweiten Signal bei einer zweiten Frequenz, insbesondere in einem Bereich von 1 MHz bis 50 MHz, bevorzugt in einem Bereich von 10 MHz bis 15 MHz;
- Bestimmen eines zweiten Messsignals in Abhängigkeit der Impedanz, insbesondere der Kapazität, zwischen der Messelektrode (3) oder der zweiten Messelektrode (3') und der Bodenplatte (4); und
- Ausgeben einer Kennung, die ein Vorhandensein von Schaum (S) im Flüssigkeitsbehälter (1) signalisiert, falls eine Differenz zwischen dem ersten und zweiten Messsignal oder ein Verhältnis des ersten und zweiten Messsignals einen vorgegebenen Schwellwert übersteigt.

8. Verfahren nach Anspruch 7, weiter umfassend den Schritt:
- Bewegen einer Trägereinheit (5) mit einer Vielzahl von Aufnahmen (6) zum Aufnehmen von Probenröhrchen (1) in horizontaler Richtung an der Messelektrode (3) vorbei,
wobei das Bestimmen des Messsignals während dem Bewegen der Trägereinheit (5) an der Messelektrode (3) vorbei geschieht.

9. Verfahren nach Anspruch 7 oder 8, wobei die Messelektrode (3) mehrere Teilelektroden (31, 32, 33) umfasst, welche in vertikaler Richtung übereinander angeordnet sind, und das Anregen der Messelektrode (3) mit dem ersten und zweiten Signal das Auswählen von mindestens einer Teilelektrode (31, 32, 33) und das Anregen von nur der mindestens einen ausgewählten Teilelektrode (31, 32, 33) umfasst.

10. Alternative Vorrichtung zur kapazitiven Schaumdetektion in Flüssigkeitsbehältern (1), insbesondere Behälter für Reagenzien oder Probenröhrchen, umfassend:
- ein Sensor (2) mit einer Messelektrode (3), welche koplanar auf einer horizontalen Bodenplatte (4) angeordnet oder in der Bodenplatte (4) integriert ist;
- eine zumindest teilweise leitende Trägereinheit (5) mit mindestens einer Aufnahme (6) zum Aufnehmen eines Flüssigkeitsbehälters (1), wobei die Trägereinheit (5) insbesondere geerdet ist, beispielsweise kapazitiv mit einem Erdpotential (GND) gekoppelt ist;
- eine Sensorelektronikeinheit (7), welche mit der Messelektrode (3) und der Trägereinheit (5) verbunden ist und zum Bestimmen einer Impedanz, insbesondere einer Kapazität, zwischen der Messelektrode (3) und der Trägereinheit (5) ausgeführt ist; und
- eine Auswerteeinheit (A),
wobei
- die Trägereinheit (5) derart auf der Bodenplatte (4) angeordnet ist, dass die Aufnahme (6) über bzw. auf der Messelektrode (3) liegt, und die Trägereinheit (5) von der Messelektrode (3) elektrisch isoliert ist;
- die Sensorelektronikeinheit (7) ein Signalgenerator umfasst, mit welchem ein erstes Signal zum Anregen der Messelektrode (3) mit einer ersten Frequenz und ein zweites Signal zum Anregen der Messelektrode (3) mit einer zweiten Frequenz erzeugbar ist; und
- die Auswerteeinheit (A) dazu ausgeführt ist, basierend auf der Impedanz, insbesondere der Kapazität, ein Vorhandensein von Schaum (S) im Flüssigkeitsbehälter (1) zu detektieren, falls eine Differenz zwischen oder ein Verhältnis von einem ersten Messsignal beim Anregen der Messelektrode (3) mit dem ersten Signal und einem zweiten Messsignal beim Anregen der Messelektrode (3) mit dem zweiten Signal einen vorgegebenen Schwellwert übersteigt.

11. Vorrichtung nach Anspruch 10, wobei die Messelektrode (3) auf oder in einem Sensorträger (8) angeordnet ist und von einer Guardelektrode (91) umgeben ist, wobei die Messelektrode (3) insbesondere rund ist und die Guardelektrode (91) insbesondere ringförmig ist.

12. Vorrichtung nach Anspruch 11, wobei auf oder in dem Sensorträger (8) unterhalb der Messelektrode (3) und der Guardelektrode (91) eine weitere Guardelektrode (92) angeordnet ist, wobei die weitere Guardelektrode (92) mindestens die Messelektrode (3) überdeckt, insbesondere die Messelektrode (3) sowie die Guardelektrode (91) überdeckt, wobei die weitere Guardelektrode (92) insbesondere kreisförmig ist.

13. Alternatives Verfahren zur kapazitiven Schaumdetektion in Flüssigkeitsbehältern (1), insbesondere Behälter für Reagenzien oder Probenröhrchen, umfassend die Schritte:
- Anordnen eines Sensors (2) mit einer Messelektrode (3) auf einer horizontalen Bodenplatte (4), wobei die Messelektrode (3) koplanar auf der Bodenplatte (4) angeordnet oder in der Bodenplatte (4) integriert ist;
- Anordnen einer zumindest teilweise leitenden Trägereinheit (5) mit mindestens einer Aufnahme (6) zum Aufnehmen eines Flüssigkeitsbehälters (1) über bzw. auf der Messelektrode (3), wobei die Trägereinheit (5) insbesondere geerdet ist, beispielsweise kapazitiv mit einem Erdpotential (GND) gekoppelt ist, und von der Messelektrode (3) elektrisch isoliert ist;
- Anordnen eines Flüssigkeitsbehälters (1) in der Aufnahme (6) ;
- Bereitstellen einer Sensorelektronikeinheit (7), welche mit der Messelektrode (3) und der Trägereinheit (5) verbunden ist;
- Anregen der Messelektrode (3) mit einem ersten Signal bei einer ersten Frequenz, insbesondere in einem Bereich von 1 kHz bis 1 MHz, bevorzugt in einem Bereich von 300 kHz bis 500 kHz;
- Bestimmen eines ersten Messsignals in Abhängigkeit einer Impedanz, insbesondere einer Kapazität, zwischen der Messelektrode (3) und der Trägereinheit (5);
- Anregen der Messelektrode (3) oder einer zweiten Messelektrode (3'), welche mit der Sensorelektronikeinheit (7) und der Trägereinheit (5) verbunden ist, mit einem zweiten Signal bei einer zweiten Frequenz, insbesondere in einem Bereich von 1 MHz bis 50 MHz, bevorzugt in einem Bereich von 10 MHz bis 15 MHz, wobei sowohl die erste wie auch die zweite Frequenz insbesondere unterschiedlich einstellbar sind;
- Bestimmen eines zweiten Messsignals in Abhängigkeit der Impedanz, insbesondere der Kapazität, zwischen der Messelektrode (3) oder der zweiten Messelektrode (3') und der Trägereinheit (5); und
- Ausgeben einer Kennung, die ein Vorhandensein von Schaum (S) im Flüssigkeitsbehälter (1) signalisiert, falls eine Differenz zwischen dem ersten und zweiten Messsignal oder ein Verhältnis des ersten und zweiten Messsignals einen vorgegebenen Schwellwert übersteigt.

14. Verfahren nach einem der Ansprüche 7 bis 9 oder alternatives Verfahren nach Anspruch 13, wobei das erste und das zweite Signal zum Anregen der Messelektrode (3) zeitgleich an die Messelektrode (3) angelegt werden, und das erste und zweite Messsignal zeitgleich bestimmt werden.

15. Verwendung des Verfahrens nach einem der Ansprüche 7 bis 9 oder des alternativen Verfahrens nach Anspruch 13 oder 14 zum Bestimmen einer Art der Flüssigkeit (12), insbesondere einer Art des Reagenzes, welche sich im Flüssigkeitsbehälter (1) befindet.
